# EUROPÄISCHE PATENTSCHRIFT

(11) **EP 1 927 278 B1**
(45) Veröffentlichungstag und Bekanntmachung des Hinweises auf die Patenterteilung: **25.01.2012**
(21) Anmeldenummer: 07120151.1
(22) Anmeldetag: 07.11.2007
(51) Int. Cl.: A01D 43/10, A01D 82/00

(54) **Gutführvorrichtung in einem landwirtschaftlichen Gerät**
Control device in an agricultural appliance
Dispositif de guidage de marchandise dans un appareil agricole

(30) Priorität: 28.11.2006 DE 102006056050
(43) Veröffentlichungstag der Anmeldung: 04.06.2008
(73) Patentinhaber: Deere & Company, Moline, IL 61265-8098 (US)
(72) Erfinder: Gradoz, Bruno, 70600, Champlitte (FR); Heinrich, Tepe, 70100, Gray La Ville (FR)
(74) Vertreter: Magin, Ludwig Bernhard

(56) Entgegenhaltungen:
- EP-A- 1 008 290
- WO-A-2004/105462
- FR-A- 2 111 471

## Beschreibung

Die Erfindung betrifft eine Gutführvorrichtung in einem landwirtschaftlichen Gerät und einen Mähaufbereiter.

Die EP 1008 290 offenbart einen Mähschlagzetter mit einem Konditionierungsblech, das einen Konditionierungsrotor bereichsweise umgibt und ein Schwadblech, mit dem der ausgeworfene Gutstrom auf den Boden abgelenkt und somit schmaler oder breiter abgelegt werden kann. Wenn das Konditionierungsblech verstellt wird, ändert sich auch die Abwurfrichtung auf das Schwadblech, das dann entsprechend nachgestellt werden muß.

Aus der WO A1 2004/105462 ist ein vergleichbares Mäh- und Aufbereitungsgerät bekannt, bei dem auf das Konditionierungsblech ein Blech folgt, das unter Federkraft entweder an das Konditionierungsblech angelegt wird und an diesem auch bei seiner Verstellung verbleibt und sich dabei in der Neigung anpasst, oder das als Schwadblech dient und unabhängig von der Verstellung des Konditionierungsblechs in einer einzigen Stellung verharrt.

Das der Erfindung zugrunde liegende Problem wird darin gesehen, dass eine Verstellung des Konditionierungsblechs eine Auswirkung auf die Schwadform hat.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise kann die Lage des stromabwärts gelegenen Abschnitts, z.B. ein Schwadblech, stets so an die Veränderung des stromaufwärts gelegenen Abschnitts, z.B. ein Konditionierungsblech, angepasst werden, dass der Übergang, z.B. ein Winkel, ein Abstand und dergleichen geringstmöglich verändert werden und der Gutfluss gleichmässig weitergeleitet wird. Die gemeinsame Verstellung kann z.B. durch ein mechanisches oder hydraulisches Gestänge oder durch eine starre, wenn auch verstellbare, Verbindung erfolgen. Die Abschnitte können als Blech, Rechen, Rollen oder dergleichen ausgebildet sein.

Wenn der eine Abschnitt mit dem anderen Abschnitt direkt verbunden ist und sich mit diesem bewegt, oder wenn beide Abschnitte an einem gemeinsamen Träger angebracht sind, dessen Stellung sich mit der Verstellung des einen Abschnitts ändert, erfolgt ebenfalls eine gemeinsame Verstellung der beiden Abschnitte.

Die Wirkung auf den Gutstrom kann verändert werden, wenn die Abschnitte selbst verstellbar sind, wobei sie auch eine andere räumliche Beziehung zueinander einnehmen können. So kann die Schwadbreite und/oder der Konditionierungseffekt geändert werden.

Eine manuelle Stellvorrichtung zum Verstellen der Abschnitte kann Hebel, Kurbeln, Gestänge und dergleichen enthalten; eine motorisch betreibbare Stellvorrichtung kann Elektro- oder Hydraulikmotoren benutzen, die von einer Bedienungsperson oder mittels einer Steuervorrichtung abhängig von Ernteparametern, Vorgaben etc. aktiviert werden. Wenn sich die Stellvorrichtung(en) auf dem Träger befindet(en), ändert sich nichts in deren räumlicher Beziehung zu den Abschnitten beim Verstellen; alternativ können die Stellvorrichtungen getrennt von dem Gehäuse angebracht werden und über Seilzüge, Leitungen oder dergleichen mit den Abschnitten verbunden werden.

Wenn eine Achse, um die der Träger schwenkbar ist, und eine Achse, um die der stromabwärts gelegene Abschnitt an dem Träger schwenkbar gelagert ist, unmittelbar benachbart sind, findet die geringst mögliche Änderung im Übergang zwischen beiden Abschnitten statt.

Da die Gutstromführung bei einem Mähaufbereiter kritisch ist, um eine gute Gutablage zu erzielen, ist es von großem Vorteil, eine entsprechende Gutführvorrichtung nahe des Teilumfangsbereichs eines Aufbereitungsrotors vorzusehen. Die erfindungsgemäße Gutführvorrichtung kann aber auch an anderen landwirtschaftlichen Geräten vorgesehen werden, so z.B. an Strohhäcksler oder an Schlegelhäckslern, d.h. überall dort, wo ein Rotor Gut führt und es abwirft, wobei Leitbleche vorgesehen werden können, deren Abschnitte auf das Gut im Aufnahme- und im Abgabebereich wirken.

In der Zeichnung ist ein nachfolgend näher beschriebenes Ausführungsbeispiel der Erfindung dargestellt. Es zeigt:
- Fig. 1: ein landwirtschaftliches Gerät in der Art eines Mähaufbereiters mit einer Gutführvorrichtung in Seitenansicht und schematischer Darstellung und

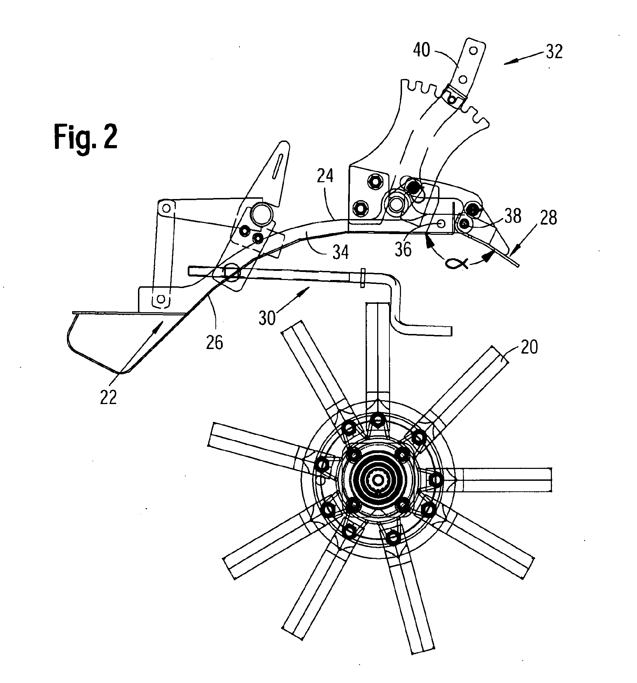

- Fig. 2: die Gutführvorrichtung nach Figur 1 mit mehreren Einzelheiten.

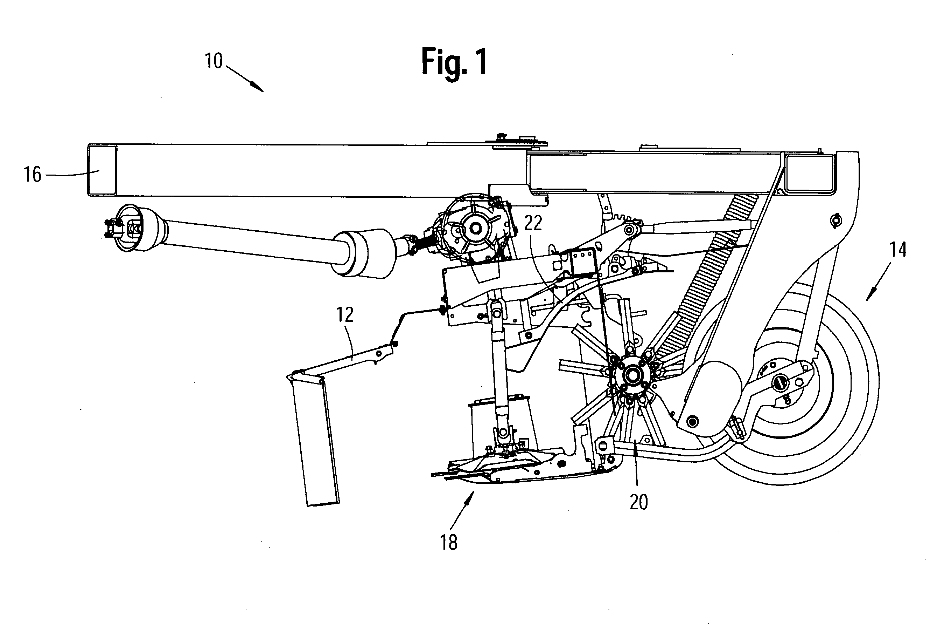

Ein in Figur 1 gezeigtes landwirtschaftliches Gerät 10 ist als ein so genannter und an sich bekannter Mähaufbereiter oder Mähschlagzetter ausgebildet und mit einem Gehäuse 12, einem Fahrwerk 14, einer Deichsel 16, einem Mähbalken 18, einem als Aufbereitungsrotor wirkenden Rotor 20 und einer Gutführvorrichtung 22 versehen.

Die Gutführvorrichtung 22 befindet sich mit Blick auf die Zeichnung gegenüber dem linken oberen Quadranten des Rotors 20 und enthält in diesem Ausführungsbeispiel einen Träger 24, einen stromaufwärts gelegenen Abschnitt 26, einen stromabwärts gelegenen Abschnitt 28, eine erste Stellvorrichtung 30 für den stromaufwärts gelegenen und eine zweite Stellvorrichtung 32 für den stromabwärts gelegenen Abschnitt 28.

Die Aufgabe der Gutführvorrichtung 22 besteht darin, gemähtes Gut zunächst in Eingriff mit dem Rotor 20 zu halten und in einen Spalt zwischen dem Rotor 20 und dem ersten Abschnitt 26 zu klemmen, so dass das inhomogene Gut aufeinander reibt und für den Trocknungsprozess aufbereitet wird. Anschließend soll das Gut, nachdem es sich von dem Rotor 20 lösen kann, entweder geradeaus fliegen, bis es auf den Boden fällt, oder von dem zweiten, dem stromabwärts gelegenen Abschnitt 28 auf den Boden gerichtet werden. Beide Funktionen können mehr oder weniger stark ausgeübt werden.

Der Träger 24 besteht eigentlich aus einem Rahmen, mit jeweils einem Endsteg 34 und evtl. nicht gezeigten Zwischenstegen, die mittels Querstreben miteinander starr verbunden sind. Die Endstege 34 sind an ihrer dem Rotor 20 zugelegenen Seite gemäß der Mantelfläche des Rotors 20 gekrümmt und erstrecken sich über circa neunzig Winkelgrade. Im oberen rückwärtigen Endbereich der Endstege 34 befindet sich ein vorderes und ein rückwärtiges Lager 36, 38. Das vordere Lager 36 befindet sich zugleich an dem Gehäuse 12 und dient der schwenkbaren Lagerung des Trägers 24 an diesem. Das rückwärtige Lager 38 dient der vertikal schwenkbaren Lagerung des stromabwärts gelegenen Abschnitts 28 an dem Träger 24. Die Achsen der Lager 36, 38 verlaufen zueinander und zu der Drehachse des Rotors 20 parallel. Die beiden Lager 36, 38 liegen unmittelbar nebeneinander, jedenfalls soweit es die tatsächlichen Umstände zulassen, um die Teile unterzubringen. Die Lager 36, 38 können als Stangen, Scharniere, Schrauben, Zapfen oder dergleichen ausgebildet sein.

Der vordere, d.h. der stromaufwärts gelegene Abschnitt 26 ist als eine gebogene Blechplatte gebildet, an der der Gutstrom entlang gleiten kann und die an die Unterseite des Trägers 24 angebracht ist - geschraubt oder geschweißt. Die stromabwärts gelegene Kante des stromaufwärts gelegenen Abschnitts 26 erstreckt sich bis zu dem stromabwärts gelegenen Abschnitt 28, hält zu diesem aber noch einen Abstand, so dass letzterer noch geschwenkt werden kann. Der Abschnitt 26 kann sich auch über das stromaufwärts gelegene Ende des Trägers 24 hinaus erstrecken und wird dort wie üblich mit einer Schürze versehen werden.

Der rückwärtige, d.h. der stromabwärts gelegene, Abschnitt 28 ist im Wesentlichen flach ausgebildet und nimmt in diesem Ausführungsbeispiel nur circa ein Fünftel der Länge des stromaufwärts gelegenen Abschnitts 26 ein, an den er unmittelbar anschließt. Während der vordere Abschnitt 26 nur um wenige Grade schwenkbar ist, kann der rückwärtige Abschnitt 28 um nahezu 90 Grad auf den Rotor 20 zu oder von diesem weg geschwenkt werden. Zwischen den beiden Abschnitten 26 und 28 ergibt sich stets ein Winkel α.

Die erste Stellvorrichtung 30 ist als ein Kurbel-Gestänge-Zusammenbau ausgebildet, der einerseits an dem Gehäuse 12 und andererseits an dem Träger 24 und somit auch an dem vorderen Abschnitt 26 vorzugsweise beweglich angebracht ist. Sobald die Stellvorrichtung 30 z.B. aus- oder eingefahren wird, verändert sich die Stellung des vorderen Abschnitts 28 gegenüber dem Rotor 20. An der Stellvorrichtung 30 bzw. an dem Träger 24 kann eine Anzeigevorrichtung vorgesehen werden, so dass eine Bedienungsperson erkennen kann, wie weit der Abschnitt 26 von der Mantelfläche des Rotors 20 entfernt ist.

Die zweite Stellvorrichtung 32 ist als ein Hebel-Gestänge-Zusammenbau ausgebildet und auf dem Träger 24 angeordnet, d.h. sie bewegt sich mit diesem. Die Stellvorrichtung 32 ist mit einem Hebel-Rasten-Mechanismus 40 ausgerüstet, mit dem der zweite, stromabwärts gelegene Abschnitt 28 um das zweite Lager 38 geschwenkt werden kann. Der zweite Abschnitt 28 wird in einer vorbestimmten Stellung gehalten, die an der Stellung des Hebel-Rasten-Mechanismus 40 zu erkennen ist.

Grundsätzlich könnte sich die erste und/oder die zweite Stellvorrichtung 30 und/oder 32 auch an dem Fahrwerk 14 bzw. dessen Rahmen befinden und über Seilzüge oder dergleichen auf den Träger 24, bzw. die Abschnitte 26, 28 wirken.

Nach alledem ergibt sich folgende Funktion.

Der stromaufwärts gelegene Abschnitt 26 befindet sich an der Unterseite und der stromabwärts gelegene Abschnitt 28 befindet sich mit der zweiten Stellvorrichtung 32 an dem rückwärtigen Endbereich des Trägers 24. Je nach der Stellung des Hebel-Rasten-Mechanismus 40 ergibt sich zwischen den beiden Abschnitten 26, 28 ein bestimmter Winkel α. Wenn die erste Stellvorrichtung 30 betätigt wird, schwenkt der Träger 24 mitsamt den beiden Abschnitten 26, 28 um das vordere Lager 36, wobei sich der Winkel α und somit das Gutflussverhalten nicht ändert.

## Patentansprüche

1. Gutführvorrichtung (22) in einem landwirtschaftlichen Gerät (10) mit einem stromaufwärts gelegenen und einen Gutstrom führenden Abschnitt (26) und einem stromabwärts gelegenen in den Gutstrom eindringbaren Abschnitt (28), die jeweils quer zu dem Gutstrom gemeinsam verstellbar sind **dadurch gekennzeichnet, dass** einer der Abschnitte (28) mittelbar über einen Träger (24) an dem anderen Abschnitt (26) angebracht ist und mit dem Träger (24) bewegbar ist.

2. Gutführvorrichtung nach Anspruch 1, **dadurch gekennzeichnet, dass** beide Abschnitte (26, 28) gegenüber dem Träger (24) verstellbar sind.

3. Gutführvorrichtung nach Anspruch 1 oder 2, **dadurch gekennzeichnet, dass** je Abschnitt (26, 28) eine eigene manuell oder motorisch betreibbare Stellvorrichtung (30, 32) vorgesehen ist.

4. Gutführvorrichtung nach einem oder mehreren der vorherigen Ansprüche, **gekennzeichnet durch** ein Lager (36), um das der stromaufwärts liegende Abschnitt (26) oder der Träger (24) schwenkbar ist, und **durch** ein Lager (38), um das der stromabwärts gelegene Abschnitt (28) an dem Träger (24) oder an dem stromaufwärts liegenden Abschnitt (26) schwenkbar gelagert ist, wobei beide Lager (36, 38) unmittelbar benachbart sind.

5. Als ein Mähaufbereiter ausgebildetes landwirtschaftliches Gerät (10) mit einer Gutführvorrichtung (22) nach einem oder mehreren der vorherigen Ansprüche nahe des Teilumfangsbereichs eines als Aufbereitungsrotor dienenden Rotors (20).

## Claims

1. Material-guiding device (22) in an agricultural apparatus (10), comprising an upstream-situated and a material-flow-guiding portion (26), and a downstream-situated portion (28) penetrable into the material flow, which portions are respectively jointly adjustable transversely to the material flow, **characterized in that** one of the portions (28) is attached indirectly via a carrier (24) to the other portion (26) and is movable with the carrier (24).

2. Material-guiding device according to Claim 1, **characterized in that** both portions (26, 28) are adjustable relative to the carrier (24).

3. Material-guiding device according to Claim 1 or 2, **characterized in that** for each portion (26, 28) there is provided a dedicated manually or motor operated actuating device (30, 32).

4. Material-guiding device according to one or more of the previous claims, **characterized by** a bearing (36), about which the upstream-situated portion (26) or the carrier (24) is pivotable, and by a bearing (38), about which the downstream-situated portion (28) is pivotably mounted on the carrier (24) or on the upstream-situated portion (26), the two bearings (36, 38) being directly adjacent.

5. Agricultural apparatus (10) configured as a mower-conditioner, comprising a material-guiding device (22) according to one or more of the previous claims close to the circumferential sub-region of a rotor (20) serving as a processing rotor.

## Revendications

1. Dispositif de guidage de produit (22) dans un engin agricole (10), comprenant une section (26) placée en amont et guidant un flux de produit et une section (28) placée en aval et pouvant être introduite dans le flux de produit, lesquelles sections peuvent être ajustées ensemble à chaque fois transversalement au flux de produit, **caractérisé en ce que** l'une des sections (28) est appliquée de manière indirecte par le biais d'un support (24) contre l'autre section (26) et peut être déplacée avec le support (24).

2. Dispositif de guidage de produit selon la revendication 1, **caractérisé en ce que** les deux sections (26, 28) peuvent être ajustées par rapport au support (24).

3. Dispositif de guidage de produit selon la revendication 1 ou 2, **caractérisé en ce que** pour chaque section (26, 28) est prévu un dispositif de commande (30, 32) propre, à commande manuelle ou motorisée.

4. Dispositif de guidage de produit selon l'une quelconque ou plusieurs des revendications précédentes, **caractérisé par** un palier (36), autour duquel la section (26) située en amont ou le support (24) peut pivoter, et par un palier (38), autour duquel la section placée en aval (28) est montée de manière à pouvoir pivoter sur le support (24) ou sur la section (26) située en amont, les deux paliers (36, 38) étant immédiatement adjacents.

5. Engin agricole (10) réalisé sous la forme d'une faucheuse-conditionneuse, comprenant un dispositif de guidage de produit (22) selon l'une quelconque ou plusieurs des revendications précédentes, proche de la région périphérique partielle d'un rotor (20) servant de rotor de conditionnement.
